# EUROPÄISCHE PATENTSCHRIFT

(11) **EP 0 790 488 B1**
(45) Veröffentlichungstag und Bekanntmachung des Hinweises auf die Patenterteilung: **02.05.2003**
(21) Anmeldenummer: 97101788.4
(22) Anmeldetag: 05.02.1997
(51) Int. Cl.: G01D 5/26, G05G 9/047

(54) **Dreiachsig drehpositionierbarer Steuerknüppel**
Triaxial rotationally-positionable joystick
Levier de commande à positionner en rotation tri-axiale

(30) Priorität: 15.02.1996 DE 19605573
(43) Veröffentlichungstag der Anmeldung: 20.08.1997
(73) Patentinhaber: EUROCOPTER DEUTSCHLAND GmbH, D-81663 München (DE)
(72) Erfinder: Zeller, Siegfried, 85667 Oberpframmern (DE)
(74) Vertreter: Asch, Konrad, Dipl.-Ing.

(56) Entgegenhaltungen:
- EP-A- 0 842 489
- DE-A- 3 314 089
- US-A- 4 459 022
- US-A- 5 181 079
- PATENT ABSTRACTS OF JAPAN vol. 018, no. 405 (P-1778), 28. Juli 1994 -& JP 06 119105 A (DIGITAL STREAM:KK), 28. April 1994

## Beschreibung

Die Erfindung bezieht sich auf einen dreiachsig drehpositionierbaren Steuerknüppel, insbesondere für einen Hubschrauber, mit einem elektronischen Sensor zur Ermittlung der Steuerknüppelposition.

Es ist bekannt, die Roll-, Nick- und Gierposition von dreiachsig verstellbaren Steuerknüppeln, wie sie etwa bei fly-by-wire gesteuerten Blattwinkelverstellsystemen von Hubschraubern Verwendung finden und dann zumeist mit einer aktiven Steuerkraftsimulation ausgerüstet sind, mit Hilfe einer berührungslos arbeitenden, induktiven Sensoranordnung abzutasten, um so die entsprechenden Steuerkommandos für die Blattwinkelverstellung und die Steuerkraftsimulation zu erhalten. Dies erfordert jedoch für jede Steuerknüppel-Achse einen eigenen Sensor und eine eigene Signalaufbereitung, so daß das entstehende Sensorpaket einen unerwünscht hohen Bau- und Gewichtsaufwand benötigt und unter beengten Einbauverhältnissen schwierig unterzubringen ist.

Ferner ist aus der US-PS 3 432 671 ein opto-elektronischer Positionsgeber bekannt, bei dem ein rechteckförmiges Lichtfeld über einen zweiachsig kippbeweglichen Umlenkspiegel auf einem aus vier kreuzförmig angeordneten Fotozellen bestehenden Sensorteil abgebildet und aus der Größe der beleuchteten Flächenanteile die Schwenklage des Umlenkspiegel bezüglich der beiden Drehachsen errechnet wird. Ein derartiger Sensor ist jedoch zur Positionsermittlung eines dreiachsig verstellbaren Steuerknüppels ungeeignet und hat weiterhin den Nachteil einer begrenzten Meßgenauigkeit, weil sich äußere Störeinflüsse, z.B. örtliche Schwankungen in der Beleuchtungsintensität, verfälschend auf das Meßergebnis auswirken.

US-A-5 181 079 zeigt eine opto-elektronische Meßanordnung, bei der drei Abtaststrahlen zur Positionsermittlung notwendig sind.

WO 97/05567 (veröffentlicht am 13.2.97) zeigt einen dreiachsigen drehpositionierbarer Computer-Joystick mit einem die Steuerknüppelposition ermittelnden opto-elektronischen Sensor.

Aufgabe der Erfindung ist es, einen Steuerküppel der eingangs genannten Art so auszubilden, daß auf baulich einfache, gewichts- und platzsparende Weise eine äußerst genaue und zuverlässige Positionsmessung bezüglich aller drei Bewegungsachsen des Steuerknüppels garantiert wird.

Diese Aufgabe wird erfindungsgemäß durch den im Patentanspruch 1 angegebenen Steuerknüppel gelöst.

Aufgrund der besonderen Steuerknüppelsensorik mit einem bewegungsgleich mit dem Steuerknüppel verschwenkten Doppelstrahl in Verbindung mit einer über den gesamten Verstellbereich des Steuerknüppels vom Doppelstrahl beleuchteten, die Lage beider Lichtflecken zweidimensional abtastenden Detektorfläche und einer aus den Lagekoordinaten der beiden Lichtflecken die Steuerknüppelposition bestimmenden Signalsauswertung ist es erfindungsgemäß gelungen, auf baulich einfache, platz- und gewichtssparende Weise mit Hilfe eines einzigen Sensors und einer zugeordneten Auswerteelektronik die Steuerknüppelbewegung nach Größe und Richtung in allen drei Achsen exakt und zuverlässig zu ermitteln. Die Erfindung eignet sich daher in hervorragender Weisefür Anwendungsfälle mit strengen Gewichtsbeschränkungen und beengten Einbauverhältnissen, wie sie etwa im Hubschrauberbau bestehen.

Ein besonders einfacher, rechentechnischer Zusammenhang zwischen den Lagekoordinaten der beiden Lichtstrahl-Leuchtfelcken auf dem Detektormosaik und der Roll-, Nick- und Gierposition des Steuerknüppels ergibt sich dadurch, daß einer der beiden Lichtstrahlen koaxial zu einer Steuerknüppel-Drehachse ausgerichtet ist.

Um lichtempfindliche Detektorfläche einzusparen, besteht das Detektormosaik aus zwei voneinander getrennten Detektorfeldem, von denen jedes jeweils im Strahlengang nur eines der beiden Lichtstrahlen gelegen ist.

Aus Herstellungsgründen ist das Detektormosaik bzw. sind die Detektorfelder eben ausgebildet. Die gegenseitige Lage der beiden Lichtstrahlen und ggf. der Detektorfelder ist je nach Einbauverhältnissen praktisch beliebig wählbar. So können die beiden Lichtstrahlen geneigt, senkrecht zueinander ausgerichtet sein, was sich für eine mehrfach redundante Sensorik empfiehlt, im allgemeinen wird jedoch eine im wesentlichen parallele gegenseitige Ausrichtung der beiden Lichtstrahlen bevorzugt.

In baulich besonders einfacher Weise werden die Lichtstrahlen durch zwei am Steuerknüppel befestigte, lichtemittierende Dioden erzeugt. Wahlweise ist es jedoch auch möglich, zur Erzeugung des Doppelstrahls eine lichtemittierende Einzeldiode mit einem nachgeordneten Strahlungsteiler vorzusehen.

Im Hinblick auf eine scharfe Bündelung der Lichtstrahlen empfiehlt es sich als Lichtstrahlen fokussierte Laserlichtstrahlen zu verwenden.

Die Erfindung wird nunmehr anhand mehrerer Ausführungsbeispiele in Verbindung mit den Zeichnungen näher erläuert. Es zeigen ist stark schematisierter Darstellung:
- **Fig. 1**: einen dreiachsig verstellbaren Steuerknüppel mit zugeordneter Steuerknüppel-Sensorik nach der Erfindung;
- **Fig 2**: eine vergrößerte Aufsicht des lichtempfindlichen Detektormosaiks nach Fig. 1;
- **Fig. 3**: ein zweites Ausführungsbeispiel mit mehrfach redundanter Steuerknüppel-Sensorik; und
- **Fig. 4**: eine modifizierte Ausführungsform des Steuerknüppels nach Fig. 1 mit zueinander senkrechter Lichtstrahl-Ausrichtung.

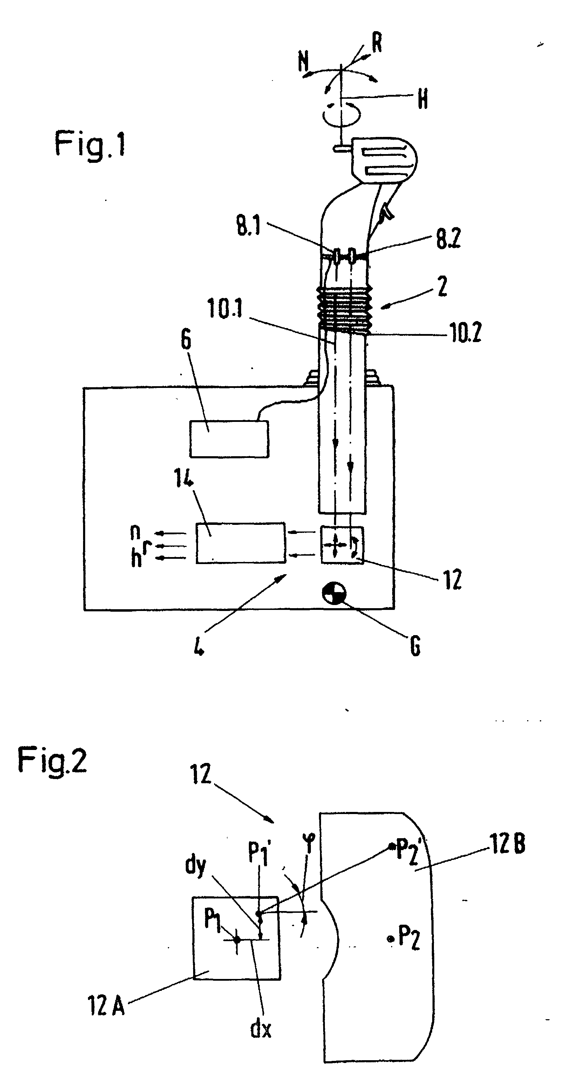

Gemäß Fig. 1 ist ein Steuerknüppel 2 um einen fiktiven Gelenkpunkt G dreiachsig, nämlich einerseits um die Hochachse H und andererseits in Längs- und Quersteuerrichtung N bzw. R begrenzt drehpositionierbar und enthält einen insgesamt mit 4 bezeichneten, opto-elektronischen Sensor, welcher die Steuerknüppelposition in allen drei Achsen mißt und entsprechende elektrische Steuerkommandos n, r und h etwa für ein nachgeordnetes, fly-by-wire gesteuertes Blattwinkelverstellsystem eines Hubschraubers und zur Steuerkraftsimulation des Steuerknüppels 2 liefert.

Der Sensor 4 enthält zwei, im Inneren des Steuerknüppels 2 befestigte, an eine Stromversorgung 6 angeschlossene Laserdioden 8.1 und 8.2 einschließlich einer Fokussiereinrichtung zur Erzeugung zweier räumlich voneinander getrennter, scharf gebündelter Laserlichtstrahlen 10.1 und 10.2, welche parallel zueinander verlaufen und von denen der eine - 10.1 - fluchtend zur Hochachse H ausgerichtet ist. Anstelle eines Diodenpaares kann zur Erzeugung des Doppelstrahls 10 auch eine Einzeldiode mit nachgeordnetem Strahlungsteiler vorgesehen sein.

Unterhalb des Steuerknüppels 2 befindet sich ein gehäusefestes Detektormosaik 12 in Form eines hochauflösenden, laserlichtempfindlichen CCD-Detektors, der über den gesamten Verstellbereich des Steuerknüppels 2 im Strahlengang der beiden Lichtstrahlen 10.1 und 10.2 liegt und die Lage der von diesen auf der Detektorfläche erzeugten Lichtpunkte P₁, P₂ ermittelt und die entsprechenden X- und Y-Koordinaten an eine nachgeordnete Auswerteelektronik 14 übergibt, wo sie auf die weiter unten erläuterte Weise in die Roll-, Nick- und Gierkommandos r, n und h des Steuerknüppels 2 umgewandelt werden.

Ausgehend von einer Nullstellung des Steuerknüppels 2, in der sich der Lichtfleck P₁ des Lichtstrahls 10.1 im Koordinatenursprung und der Lichtfleck P₂ auf der X-Achse eines zweidimensionalen, detektorfesten Bezugssystems befindet, sei angenommen, daß der Steuerknüppel 2 um jede seiner drei Achsen verschwenkt wird, so daß der Lichtfleck P₁ zum Punkt P₁' und der Lichtfleck P₂ zum Punkt P₂' wandert (siehe Fig. 2). Die Änderungen der Lichtfleck-Koordinaten werden vom Detektormosaik 12 digital erfaßt. Dabei sind die Koordinatenverschiebungen dy und dx des Lichtflecks P₁ ein unmittelbares Maß für die Roll- und Nickbewegung des Steuerknüppels 2, während sich der Gierwinkel ϕ um die Hochachse H aus der X- und Y-Koordiantendifferenz der Lichtpunkte P₁' und P₂' nach der Beziehung tan ϕ = (y₂' - y₁') ö (x₂' - x₁') ergibt.

Die Lichtstrahlen 10.1 und 10.2 können jedoch auch eine irgenderwünscht andere Orientierung zueinander und zur Hochachse H besitzen. In diesem Fall ist es zur Justierung des Sensors 2 lediglich erforderlich, die Koordinaten der beiden Lichtflecken P₁ und P₂ in der Null-Lage und in einer zweiten, gegenüber dieser allein um die Hochachse H verdrehten Steuerknüppelposition in der Auswerteelektronik 14 zu speichern und die oben angegebenen Beziehungen zwischen den Meßwerten des Detektormosaiks 12 und den Ausgangssignalen n, r und h in entsprechender Weise zu modifizieren.

Aus Gründen einer baulichen Vereinfachung ist das Detektormosaik 12 eben ausgebildet. Dies hat zur Folge, daß sich bei einer Schwenkbewegung des Steuerknüppels 2 der Abstand zwischen den beiden Lichtflecken P₁ und P₂ geringfügig ändert, was sich durch entsprechende, z.B. tabellenförmig in der Auswerteelektronik 14 abgelegte Korrekturfaktoren berücksichtigen läßt. Sind die Verstellbewegungen des Steuerknüppels 2 kleiner als der gegenseitige Abstand der Lichtstrahlen 10.1 und 10.2, so verbleiben die Lichtflecken P₁ und P₂ jeweils in voneinander getrennten Flächenbereichen. Um lichtempfindliche Detektorfläche einzusparen, ist daher das Detektormosaik 12 aus zwei voneinander getrennten Detektorfeldern 12A und 12B zusammengesetzt, die nach Form und Größe den von den Lichtflecken P₁ bzw. P₂ überwanderten Flächenteilen entsprechen.

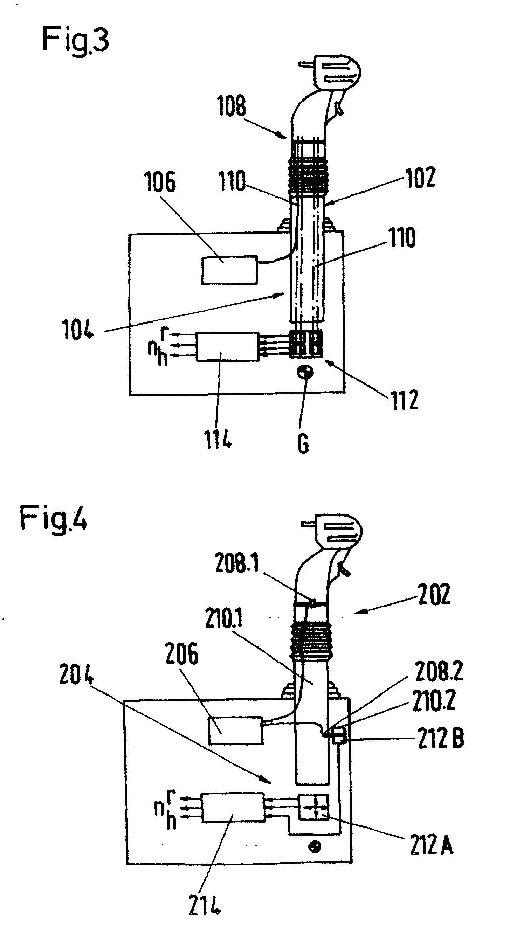

In Fig. 3, wo die dem ersten Ausführungsbeispiel entsprechenden Komponenten durch ein um 100 erhöhtes Bezugszeichen gekennzeichnet sind, ist ein Steuerknüppel 102 mit einer mehr-, nämlich vierfach redundanten Sensorik 104 dargestellt. Demgemäß werden von einer entsprechenden Vielzahl von Laserdioden 108 insgesamt vier Doppelstrahlen 110 erzeugt, die jeweils auf eines von vier um die Hochachse H des Steuerknüppels 102 gruppierten Detektormosaiken 112 auftreffen. Die Lagekoordinaten des auf den einzelnen Detektormosaiken 112 jeweils entstehenden Lichtfleckenpaares werden an eine gemeinsame Auswerteelektronik 114 übermittelt, wo aus ihnen wiederum die Roll-, Nick- und Gierposition des Steuerknüppels 102 errechnet wird. Die Auswerteelektronik 114 ist so gestaltet, daß der Sensor bei einem Ausfall einzelner Sensorkomponenten voll funktionsfähig bleibt. Im übrigen ist die Bau- und Funktionsweise die gleiche wie beim Ausführungsbeispiel nach den Fig. 1 und 2.

Der Steuerknüppel 202 nach Fig. 4, in welcher die einzelnen Komponenten durch ein um 200 erhöhtes Bezugszcichen gekennzeichnet sind, unterscheidet sich von den vorhergehenden Ausführungsbeispielen durch eine andere gegenseitige Orientierung des Lichtstrahlpaares 210. Während der eine, von der Laserlichtdiode 208.1 emittierte Lichtstrahl 210.1 unverändert in Richtung der Steuerknüppel-Hochachse verläuft, ist der zweite, von der Laserlichtdiode 208.2 erzeugte Lichtstrahl 210.2 im wesentlich radial zum Steuerknüppel 202 auf das in diesem Fall seitlich neben dem Steuerknüppel 202 am Gehäuse befestigte Detektorfeld 212B gerichtet. Stattdessen kann das Detektorfeld 212B aber auch in gleicher Weise wie beim ersten Ausführungsbeispiel in der Ebene des Detektorfeldes 212A seitlich neben diesem angeordnet und anstelle des Detektorfeldes 212B ein Umlenkspiegel vorgesehen sein, der den seitlich gerichteten Laserlichtstrahl 210.2 nach unten auf das Detektorfeld 212B umlenkt. Unter Berücksichtigung der andersartigen Strahlenführung arbeitet die Auswertelektronik auf der Basis entsprechend modifizierter Rechenoperationen zur Umsetzung der Lichtfleck-Lagekoordinaten in die Positionssignale r, n und h des Steuerknüppels 202. Im übrigen ist die Bau- und Funktionsweise die gleiche wie bei den oben beschriebenen Ausführungsbeispielen.

## Patentansprüche (Patentansprüche für folgende(n) Vertragsstaat(en): IT, NL)

1. Dreiachsig drehpositionierbarer Steuerknüppel (2) insbesondere für einen Hubschrauber mit einem die Steuerknüppelposition ermittelnden opto-elektronischen Sensor (4), der enthält
- einen bewegungsfest mit dem Steuerknüppel verbundenen, genau zwei räumlich voneinander getrennte Lichtstrahlen (10.1, 10.2) aussendenden Strahler (8),
- ein feststehendes, über den gesamten Verstellbereich des Steuerknüppels im Strahlengang beider Lichtstrahlen gelegenes, lichtempfindliches Detektormosaik (12) zur Ermittlung der Lagekoordinaten der beiden, von den Lichtstrahlen auf dem Detektormosaik erzeugten Lichtflecken (P₁, P₂), und
- eine aus den Lagekoordinaten der beiden Lichtflecken die Roll-, Nick- und Gierposition (r, n, h) des Steuerknüppels bestimmende Auswerteschaltung (14).

2. Steuerknüppel nach Anspruch 1,
wobei einer der beiden Lichtstrahlen (10.1) fluchtend zu einer Steuerknüppel-Drehachse (H) ausgerichtet ist.

3. Steuerknüppel nach einem der vorhergehenden Ansprüche,
wobei das Detektormosaik (12) aus zwei getrennten, jeweils im Strahlengang eines der Lichtstrahlen (10) gelegenen Detektorfeldern (12A, 12B) besteht.

4. Steuerknüppel nach Anspruch 3,
wobei die beiden Detektorfelder (12A, 12B) in einer gemeinsamen Ebene angeordnet sind.

5. Steuerknüppel nach Anspruch 3 oder 4,
wobei die beiden Lichtstrahlen (210) geneigt, vorzugsweise senkrecht zueinander verlaufen.

6. Steuerknüppel nach einem der Ansprüche 1 bis 4,
wobei die beiden Lichtstrahlen (10) parallel zueinander ausgerichtet sind.

7. Steuerknüppel nach einem der vorhergehenden Ansprüche,
mit einem aus zwei am Steuerknüppel (2) befestigten, lichtemittierenden Dioden (8.1, 8.2) bestehenden Strahler (8).

8. Steuerknüppel nach einem der Ansprüche 1 bis 6,
mit einem Strahler (8), der aus einer lichtemittierenden Einzeldiode und einem dieser nachgeordneten Strahlungsteiler besteht.

9. Steuerknüppel nach einem der vorhergehenden Ansprüche,
wobei der Strahler (8) ein Laserlichtstrahler ist.

## Patentansprüche (Patentansprüche für folgende(n) Vertragsstaat(en): DE, FR, GB)

1. Dreiachsig drehpositionierbarer Steuerknüppel (2) für einen Hubschrauber mit einem die Steuerknüppelposition ermittelnden opto-elektronischen Sensor (4), der enthält
- einen bewegungsfest mit dem Steuerknüppel verbundenen, mindestens zwei räumlich voneinander getrennte Lichtstrahlen (10.1, 10.2) aussendenden Strahler (8), wobei einer der beiden Lichtstrahlen (10.1) fluchtend zu einer Steuerknüppel-Drehachse (H) ausgerichtet ist,
- ein feststehendes, über den gesamten Verstellbereich des Steuerknüppels im Strahlengang beider Lichtstrahlen gelegenes, lichtempfindliches Detektormosaik (12) zur Ermittlung der Lagekoordinaten der beiden, von den Lichtstrahlen auf dem Detektormosaik erzeugten Lichtflecken (P₁, P₂), und
- eine aus den Lagekoordinaten der beiden Lichtflecken die Roll-, Nick- und Gierposition (r, n, h) des Steuerknüppels bestimmende Auswerteschaltung (14),
**dadurch gekennzeichnet, dass** das Detektormosaik (12) aus zwei getrennten, jeweils im Strahlengang eines der Lichtstrahlen (10) gelegenen Detektorfeldern (12A, 12B) besteht.

2. Steuerknüppel nach Anspruch 1, wobei die beiden Detektorfelder (12A, 12B) in einer gemeinsamen Ebene angeordnet sind.

3. Steuerknüppel nach Anspruch 1 oder 2, wobei die beiden Lichtstrahlen (210) geneigt, vorzugsweise senkrecht zueinander verlaufen.

4. Steuerknüppel nach einem der Ansprüche 1 bis 2, wobei die beiden Lichtstrahlen (10) parallel zueinander ausgerichtet sind.

5. Steuerknüppel nach der Ansprüche 1 bis 4, mit einem Strahler (8), der aus einer lichtemittierenden Einzeldiode und einem dieser nachgeordneten Strahlungsteiler besteht.

## Claims (Claims for the following Contracting State(s): IT, NL)

1. Triaxially rotationally positionable control stick (2), particularly for a helicopter, with an optoelectronic sensor (4) which determines the control stick position, comprising
- a radiator (8), joined to the control stick in a motionally rigid manner, which precisely emits two light beams (10.1, 10.2) which are spatially separate from one another,
- a fixed, light-sensitive detector mosaic (12), located in the beam path of both light beams over the entire range of adjustment of the control stick, for determining the position coordinates of the two light spots (P₁, P₂) produced on the detector mosaic by the light beams, and
- an evaluation circuit (14) which determines the roll, pitch and yaw position (r, n, h) of the control stick from the position coordinates of the two light spots.

2. Control stick according to Claim 1,
one of the two light beams (10.1) being in alignment with a rotational axis (H) of the control stick.

3. Control stick according to either one of the preceding Claims,
the detector mosaic (12) consisting of two separate detector fields (12A, 12B), respectively located in the beam path of one of the light beams (10).

4. Control stick according to Claim 3,
the two detector fields (12A, 12B) being disposed in a common plane.

5. Control stick according to either of Claims 3 or 4,
the two light beams (210) being inclined, preferably perpendicular to one another.

6. Control stick according to any one of Claims 1 or 4,
the two light beams (10) being aligned in parallel to one another.

7. Control stick according to any one of the preceding Claims,
with a radiator (8) consisting of two light-emitting diodes (8.1, 8.2) which are attached to the control stick (2).

8. Control stick according to any one of Claims 1 to 6,
with a radiator (8) which consists of a light-emitting single diode and a beam splitter downstream from the latter.

9. Control stick according to any one of the preceding Claims,
the radiator (8) being a laser light radiator.

## Claims (Claims for the following Contracting State(s): DE, FR, GB)

1. Triaxially rotationally positionable control stick (2) for a helicopter, with an optoelectronic sensor (4) which determines the control stick position, comprising
- a radiator (8), joined to the control stick in a motionally rigid manner, which emits at least two light beams (10.1, 10.2) which are spatially separate from one another, one of the two light beams (10.1) being in alignment with a rotational axis (H) of the control stick,
- a fixed, light-sensitive detector mosaic (12), located in the beam path of both light beams over the entire range of adjustment of the control stick, for determining the position coordinates of the two light spots (P₁, P₂) produced on the detector mosaic by the light beams, and
- an evaluation circuit (14) which determines the roll, pitch and yaw position (r, n, h) of the control stick from the position coordinates of the two light spots,
**characterized in that** the detector mosaic (12) consists of two separate detector fields (12A, 12B) respectively located in the beam path of one of the light beams (10).

2. Control stick according to Claim 1, the two detector fields (12A, 12B) being disposed in a common place.

3. Control stick according to either of Claims 1 or 2, the two light beams (210) being inclined, preferably perpendicular to one another.

4. Control stick according to either of Claims 1 or 2, the two light beams (10) being aligned in parallel to one another.

5. Control stick according to Claims 1 to 4, with a radiator (8) which consists of a light-emitting single diode and a beam splitter downstream from the latter.

## Revendications (Revendications pour l'(les) Etat(s) contractant(s) suivant(s): IT, NL)

1. Levier de commande (2) à trois axes notamment pour un hélicoptère comportant un capteur optoélectronique (4) déterminant la position du levier de commande, ce capteur comportant :
- un émetteur (8) solidaire en mouvement du levier de commande et émettant précisément deux faisceaux lumineux (10.1, 10.2) séparés l'un de l'autre dans l'espace,
- une mosaïque de détecteur (12) photosensible, fixe, située dans toute la plage de réglage du levier de commande dans le chemin des deux faisceaux lumineux pour déterminer les coordonnées de position des deux taches lumineuses (P₁, P₂) générées par les rayons lumineux sur la mosaïque de détecteur, et
- un circuit d'exploitation (14) qui, à partir des coordonnées de position des deux taches lumineuses, détermine la position de roulis, de tangage et de lacet (r, n, h) du levier de commande.

2. Levier de commande selon la revendication 1,
**caractérisé en ce que**
l'un des deux rayons lumineux (10.1) est aligné sur l'axe de rotation (H) du levier de commande.

3. Levier de commande selon l'une quelconque des revendications précédentes,
**caractérisé en ce que**
la mosaïque de détecteur (12) se compose de deux champs de détecteur séparés (12A, 12B) situés chacun dans le chemin de l'un des faisceaux lumineux (10).

4. Levier de commande selon la revendication 3,
**caractérisé en ce que**
les deux champs de détecteur (12A, 12B) se trouvent dans un plan commun.

5. Levier de commande selon l'une quelconque des revendications 3 ou 4,
**caractérisé en ce que**
les deux faisceaux lumineux (210) sont inclinés l'un par rapport à l'autre et de préférence perpendiculaires.

6. Levier de commande selon l'une quelconque des revendications 1 à 4,
**caractérisé en ce que**
les deux faisceaux lumineux (10) sont parallèles l'un à l'autre.

7. Levier de commande selon l'une quelconque des revendications précédentes,
**caractérisé par**
un émetteur (8) formé de deux diodes photo-émissives (8.1, 8.2) fixées au levier de commande (2).

8. Levier de commande selon l'une quelconque des revendications 1 à 6,
**caractérisé par**
un émetteur (8) formé d'une seule diode photo-émissive et d'un diviseur de faisceau en aval de celle-ci.

9. Levier de commande selon l'une quelconque des revendications précédentes
**caractérisé en ce que**
l'émetteur (8) est un émetteur de lumière laser.

## Revendications (Revendications pour l'(les) Etat(s) contractant(s) suivant(s): DE, FR, GB)

1. Levier de commande (2) à trois axes pour un hélicoptère comportant un capteur optoélectronique (4) déterminant la position du levier de commande et comprenant :
- un émetteur (8) solidaire en mouvement du levier de commande et émettant au moins deux faisceaux lumineux (10.1, 10.2) séparés dans l'espace, l'un des deux faisceaux lumineux (10.1) étant aligné sur l'axe de rotation (H) du levier de commande,
- une mosaïque de détecteur (12) photosensible, fixe, située pour toute la plage de réglage du levier de commande dans le chemin des deux faisceaux lumineux pour déterminer les coordonnées de position des deux taches lumineuses (P₁, P₂) générées par les rayons lumineux sur la mosaïque de détecteur, et
- un circuit d'exploitation (14) qui, partant des coordonnées de position des deux taches lumineuses, détermine la position de roulis, tangage et lacet (r, n, h) du levier de commande,
**caractérisé en ce que**
la mosaïque de détecteur (12) se compose de deux champs de détecteur (12A, 12B) séparés, situés chacun dans le chemin de l'un des faisceaux lumineux (10).

2. Levier de commande selon la revendication 1,
**caractérisé en ce que**
les deux champs de détecteur (12A, 12B) sont situés dans un plan commun.

3. Levier de commande selon l'une quelconque des revendications 1 ou 2,
**caractérisé en ce que**
les deux faisceaux lumineux (210) sont inclinés l'un par rapport à l'autre et notamment perpendiculaires l'un à l'autre.

4. Levier de commande selon l'une quelconque des revendications 1 à 2,
**caractérisé en ce que**
les deux faisceaux lumineux (10) sont alignés parallèlement l'un à l'autre.

5. Levier de commande selon l'une quelconque des revendications 1 à 4,
**caractérisé par**
un émetteur (8) composé d'une unique diode photo-émissive et d'un diviseur de faisceau en aval.
